(19) Europäisches Patentamt
European Patent Office
Office européen des brevets

(11) Publication number: **0 211 649 B1**

(12) **EUROPEAN PATENT SPECIFICATION**

(45) Date of publication of patent specification: **24.04.91**

(51) Int. Cl.[5]: **B29B 7/82**, C08L 67/02, //(C08L67/02,23:02)

(21) Application number: **86306027.3**

(22) Date of filing: **05.08.86**

# (54) Process for fabricating tough polyethylene terephthalate articles with low gas and organic liquid permeability.

(30) Priority: **06.08.85 US 762873**

(43) Date of publication of application:
**25.02.87 Bulletin 87/09**

(45) Publication of the grant of the patent:
**24.04.91 Bulletin 91/17**

(84) Designated Contracting States:
**AT BE CH DE FR GB IT LI NL SE**

(56) References cited:
**EP-A- 0 044 616**
**WO-A-85/03718**
**US-A- 3 435 093**
**EP-A- 0 096 947**
**FR-A- 1 576 703**
**US-A- 3 931 114**

(73) Proprietor: **E.I. DU PONT DE NEMOURS AND COMPANY**
**1007 Market Street**
**Wilmington Delaware 19898(US)**

(72) Inventor: **Subramanian, Pallatheri Manackal**
**2710 Tanager Drive**
**Wilmington Delaware 19808(US)**

(74) Representative: **Jones, Alan John et al**
**CARPMAELS & RANSFORD 43 Bloomsbury Square**
**London, WC1A 2RA(GB)**

EP 0 211 649 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

BACKGROUND OF THE INVENTION

Field of the Invention: This invention relates to tough polyethylene terephthalate articles with low organic liquid and vapor permeability and to a process for making such articles.

State of the Art: Polyethylene terephthalate (PET) is widely used in making containers, i.a ., for fluids, as well as in packaging films and wraps. It also is widely used in combination with various other resins for fabrication of other types of articles by such techniques as extrusion, injection molding, and thermoforming. The normal commercial PET resin does not have good toughness and therefore often is modified by the addition of toughening agents such as, e.g., elastomers or soft polyolefins; see, for example, U.S. Patent 4,172,859 (to Epstein) and British Patent 1,208,585 (to Imperial Chemical Industries), U.S. Patent 3,435,093 (to Cope) discloses blends of PET with copolymers of ethylene with $\alpha$, $\beta$-unsaturated carboxylic acids and their salts.

A proposal for making amorphous PET containers is described in US-A-3803275. In the process, PET is extruded to form a hollow slug. Mold halves are closed around the slug and air is introduced into the interior of the slug, forcing the slug to expand and conform to the shape of the mould. The mould is maintained at a temperature of -20 to -10 °C. After removal from the mould, the bottle is quenched at a temperature of -20 to -10 °C in a solution of water and methanol.

EP-A-0203739, which is included in the state of the art within the meaning of Article 54(3) EPC, describes an oriented polyester film comprising a blend of a linear polyester (especially PET), a resin incompatible with the linear polyester, and an ionomer resin. The incompatible resin is a resin which remains substantially unmelted or immiscible with the linear polyester during extrusion and treatment of the film. Specifically, the incompatible resin may be a polyamide or an olefin polymer. The combined incompatible and ionomer resin concentration is preferably from 0.1 to 35% by weight of the total blend, and the ionomer is preferably in an amount of from 0.5 to 75% by weight of the incompatible resin. The film is formed by any known process and is then preferably heat set to induce crystallisation of the polyester.

A similar film to that of EP-A-0203739 is disclosed in US-A-4368295. The film comprises a linear polyester, especially PET, 0.5-100% based on the weight of polyester of an olefin polymer, and a carboxylated polyolefin in an amount of 0.05-50% based on the weight of the olefin polymer. The film is produced by a conventional technique is preferably heat set.

In normal fabrication of injection-molded PET articles, or extruded articles such as films or fibers, or blow-molded containers, those articles are processed or modified so as to obtain maximum PET crystallinity. In the case of blow-molded containers such as carbonated beverage bottles, this is usually accomplished by molecular orientation (e.g ., by stretching) and often followed by heat setting and annealing (Wyeth U.S. 3,733,309). In injection molding or thermoforming, crystallinity of the PET resin is promoted by keeping the mold hot (normally over 100 °C) by using heated oil. Various nucleating agents such as, e.g. , talc are often added to PET resin compositions to induce crystallization (Furukawa U.S. 3,368,995). Both nucleating agents and plasticizers must always be used to obtain tough, fully crystallized products having good surface characteristics when molten PET resin is shaped in standard water cooled molds, below about 100 °C (see Deyrup U.S. 4,352,904 and U.S. 4,486,564). The above-cited patents stress the need to fully crystallize PET, to improve the properties of the articles made therefrom.

Thus, for injection molding in particular, it has normally been found essential to extensively modify polyethylene terephthalate to obtain satisfactory mechanical properties such as notched impact strength, stiffness, and tensile strength. As a result, injection molded containers of such modified polyethylene terephthalate, while providing excellent barrier properties, are too expensive for many applications.

It would be desirable to produce PET-based fabricated articles such as containers, films, tubing, etc., which would combine toughness with satisfactory barrier properties with respect to organic liquids and vapors, and which could be made in a less expensive and simpler manner, so that such articles could be mass-produced to satisfy market needs. In particular, it is desirable to produce PET articles such as paint cans and the like for commercial products containing organic liquids, especially hydrocarbon solvents or diluents.

According to this invention, there is now provided a process for fabricating tough articles having low permeability to many organic liquids and vapors, wherein a blend of 45-95 weight percent of PET with 5-55 weight percent of a copolymer of an $\alpha$-olefin having 2-5 carbon atoms with an $\alpha$, $\beta$-unsaturated carboxylic acid having 3-5 carbon atoms, or an ionomer obtained by a complete or partial neutralization of such a copolymer to form a zinc or magnesium salt of the carboxylic acid, or a blend of PET with an ethylene/glycidyl group-containing copolymer is melt-processed in shaping equipment such as, e.g.,

injection molding, blow molding, or extrusion equipment under conditions minimizing crystallization by maintaining the equipment surfaces in contact with the blend at a temperature lower than about 100 ° C, preferably less than 90 ° C, and even more preferably less than 50 ° C, or by quenching rapidly below such temperatures when fabricating in equipment operating at a higher temperature, for achieving maximum toughness.

PET employed in the process of this invention is a commercial product available from several sources. Preferably, it should have an inherent viscosity of about 0.4 to 4.0 dL/g.

The term "copolymer", as used in the present specification and claims, means a polymer obtained by copolymerization of at least two monomers; it is not limited to a product of copolymerization of only two monomers.

The copolymer of an $\alpha$-olefin with an $\alpha$, $\beta$-unsaturated carboxylic acid contains at least 70 weight % of $\alpha$-olefin component and at most 30 weight % of $\alpha$, $\beta$-unsaturated carboxylic acid component, the carboxylic acid groups being randomly distributed throughout the copolymer molecule. The carboxylic acid groups can be neutralized with zinc or magnesium cations to any degree within the full range of 0-100%. Neutralization with alkali metal ions is undesirable because it promotes PET crystallization. The preferred $\alpha$-olefin is ethylene; other $\alpha$-olefins include, for example, propylene, 1-butene, and 1-pentene. Representative unsaturated carboxylic acids include, for example, acrylic acid, methacrylic acid, monoethyl and monomethyl maleate, monoethyl and monomethyl fumarate, monomethyl and monoethyl itaconate, ethacrylic acid, maleic acid, fumaric acid, and itaconic acid.

A third ethylenically unsaturated monomer may be present in those copolymers, especially an acrylic ester or vinyl ester, for example: butyl acrylate, methyl methacrylate, or vinyl acetate. When the copolymer is a terpolymer of ethylene with an $\alpha$, $\beta$-unsaturated carboxylic acid and with a third ethylenically unsaturated monomer, the respective weight proportions of these monomers are: ethylene 40 to 90%, $\alpha$, $\beta$-unsaturated carboxylic acid 0.5-20%, and the third ethylenically unsaturated monomer 10-40%. The sum of the percentage contents of the monomers is 100%. The carboxylic groups, as in the case of dipolymers, can be unneutralized or neutralized to any degree with zinc or magnesium cations.

All such copolymers are generally known, and some of those copolymers are commercially available, while others can be prepared by free-radical copolymerization, preferably in solution in a hydrocarbon solvent, either in liquid or in vapor phase. When the desired proportion of carboxylic acid is small, the polymerization is preferably carried out in a continuous process, adjusting the monomer ratios to their respective polymerization activities and limiting the residence time to prevent complete conversion of the $\alpha$-olefin to polymer.

The ethylene/glycidyl group containing copolymer is a copolymer E/X/Y, where the monomers E, X, and Y are as follows:

E is ethylene and comprises 40-90 weight percent of the ethylene copolymer;

X is a carboxylic ester represented by the formula

$$CH_2= \overset{R_2}{\overset{|}{C}}H-\overset{O}{\overset{\|}{C}}-O-R_1 .$$

where $R_1$ is an alkyl group with 2-8 carbon atoms, preferably 4-6 carbon atoms, especially 4 carbon atoms; and

$R_2$ is H, $CH_3$, or $C_2H_5$, preferably H or $CH_3$, especially H; and X comprises 10-40 weight percent, preferably 15-35 weight percent, especially 20-35 weight percent of the E/X/Y copolymer; and

Y is selected from the group consisting of glycidyl methacrylate and glycidyl acrylate, and Y comprises 0.5-20 weight percent, preferably 2-10 weight percent, especially 3-8 weight percent of the E/X/Y copolymer.

The sum of the percentage contents of the monomers is 100%.

Additional comonomers, e.g. CO and methyl acrylate, can also be present in minor amount, provided that the essential characteristics of the ethylene copolymer such as melt viscosity and toughening ability are not substantially altered.

The above copolymers can be prepared by direct copolymerization, for example, copolymerization of ethylene, glycidyl methacrylate or glycidyl acrylate, and the above-defined carboxylic ester, X, in the presence of a free-radical polymerization initiator at elevated temperatures, preferably 100-270 ° C, and most preferably 130-230 ° C, and at elevated pressures, preferably at least 70 MPa, and most preferably 140-350 MPa.

In addition to the above two required components, the polymer blend may also contain a third polymer which is chemically inert to the other two polymers under melt-processing conditions. Typical such

additional polymers include, for example, various polyolefins such as, e.g ., polyethylene, polypropylene, and ethylene/propylene copolymers; polystyrene; ethylene/vinyl acetate copolymers, ethylene/alkyl acrylate copolymers, and the like, and mixtures thereof. The amount of third polymer, if present, can be at most equal to the weight of α-olefin/α,β-unsaturated carboxylic acid copolymer or E/X/Y copolymer, the total amounts of all polymers in the blend being such that the PET proportion remains within the 45-99% range.

The preferred carboxylic group-containing copolymer is ethylene/methacrylic acid (E/MAA) copolymer, and its preferred content is about 20-40% by weight of the blend. The preferred E/MAA copolymer contains about 80-97 weight % of ethylene and 3-20 weight % of methacrylic acid, which can be either free or converted to any desired extent to its zinc or magnesium salt.

The preferred E/X/Y copolymer is one where X is n-butyl acrylate and Y is glycidyl methacrylate or acrylate. The preferred weight proportions of the monomers are: ethylene, 40 to 90%; n-butyl acrylate 10 to 40%; and glycidyl methacrylate or acrylate, 0.5 to 20.0%.

Fillers normally are not desired because their presence increases permeability to organic liquids and vapors, unless their surface adhesion is closely controlled. Yet, small amounts of non-nucleating fillers, such as e.g. , pigments, carbon black, or calcium carbonate, up to about 10% of the total polymer weight, can be tolerated. Fillers should be finely ground to minimize the possible adverse effect of those additives on the barrier properties of the blend.

The compositions are thoroughly melt blended in melt-processing equipment such as, e.g ., extruders, roll mills, and Banbury mixing equipment, either in a separate operation prior to fabrication into articles or in conjunction with such fabrication, e.g ., by injection molding or extrusion into a sheet or a film. The fabrication itself is conducted under conditions inhibiting extensive PET crystallization.

Since it is in practice difficult to directly measure the temperature of the fabricating equipment surfaces in contact with the polymer blend, the temperature of the coolant passed through the equipment, e.g., a mold, close to the surfaces in contact with the polymer blend is measured. For the purpose of the present disclosure and claims, those temperatures are believed to be so close to each other that they are taken to be the same.

The polymer blends used in the present invention have good barrier properties to many organic liquids, including such as are used commercially as solvents, diluents, or dispersants. Typical such organic liquids include, for example, aliphatic and aromatic hydrocarbons, ketones, alcohols, ethers, and esters. The polymer blends used in the present invention also have good barrier properties to the vapors of such organic liquids.

The process of the present invention is particularly suitable for melt-fabricating articles such as, for example, containers, container parts and closures, and films or sheets; especially, paint cans, caulking tube tips and plungers, toothpaste tube tips, container screwcaps, cereal box liners, waste water pond covers, and film for casings used for industrial explosives.

The invention is now illustrated by representative examples of certain preferred embodiments thereof, where all parts, proportions, and percentages are by weight unless otherwise indicated.

Test articles were either tumblers or films. The tumblers were approximately 9.5 cm high, with a diameter of 7 cm at the top and 5 cm at the bottom and with a wall thickness of about 1.25 mm, which were injection-molded in a Cincinnati Milacron machine model with a 150 ton clamp pressure. The mold was cooled with running water having a temperature of 18-20 °C.

Toughness of wall sections of those test tumblers was determined in a drop impact test, using several samples for statistical evaluation of the results. Test data, which originally were obtained in British units, were converted to SI units.

For comparison, some of the molded articles were annealed to induce crystallization by heating in an oven for 24 hours at 110 °C.

Crystallinity of the molded articles was determined by differential scanning calorimetry (DSC), using a Du Pont thermal analyzer 1090 attachment. The heating rate was 10 °C per minute. The exotherm peak obtained during the heating cycle is representative of amorphous PET, which crystallizes during the operation, while the freezing exotherm during the cooling cycle is representative of the total crystallizable PET.

Permeability of the unannealed tumblers was determined by filling each tumbler with approximately 100 g of technical grade xylene, sealing it with a tight metal lid, and determining weight loss after storage at 60 °C for 688 hrs. Results of three tests were averaged.

Film permeability tests were carried out as follows:
The films were made by a blowing process using a 2.5 cm Killion extruder and 2.5 cm circular blown film die. The films were quenched by using nitrogen gas. The films were about 1-2 mil (0.025-0.05 mm) thickness. These films were tested for permeability barrier properties for xylene vapors by using the film as

a lid in an aluminum cup of 5 cm diameter and containing about 50 ml of xylene. The permeability was determined by weight loss at ambient temperature and pressure conditions.

Examples 1-5

The results are summarized in the following Table I. In all cases, the resin was a blend of 65% of PET and 35% of a copolymer described below:
Example 1 - E/MAA 96:4 (melt index = 0.8);
Example 2 - E/MAA 90.7:9.3 (melt index = 2.6);
Example 3 - E/MAA 90:10, 71% neutralized with zinc;
Example 4 - E/isobutyl acrylate/MAA 80:10:10, 73% neutralized with zinc;
Example 5 - Same as Example 4, but also contained 0.3% of pentaerythritol tetrastearate (lubricant).

Permeability tests were carried out on unannealed tumblers as described above.

**Table I**

| Example | As Molded: Drop Impact Strength (J) | As Molded: DSC Crystall. Exotherm °C | As Molded: DSC Crystall. Exotherm J/g | As Molded: Total Xylene Loss g (Avg) | Annealed: Crystall. Exotherm(1) °C | Annealed: Crystall. Exotherm(1) J/g | Annealed: Freezing Exotherm °C | Annealed: Freezing Exotherm J/g | Annealed: Drop Impact Strength (J) |
|---|---|---|---|---|---|---|---|---|---|
| 1 | 35.9 | 117.8 | 14.4 | 0.56 | None | | 194.3 | 26.9 | 2.7 |
| 2 | 37.06(2) | 116.2 | 13.8 | 2.4 | None | | 29.8 | 3.27 | 2.4 |
| 3 | 37.06(2) | 116.5 | 13.0 | 0.26 | None | | 28.3 | 20.3 | 0.26 |
| 4 | 37.06(2) | 115.3 | 17.7 | 3.5 | None | | 41.2 | 33.9 | 3.5 |
| 5 | 37.06(2) | 116.9 | 14.2 | 1.4 | None | | 29.9 | 36.1 | 1.4 |

(1) The result shows that material is fully crystallized.

(2) No failure

Examples 6-7

Drop impact strength tests were repeated using a resin which was a blend of 70% PET and 30% of E/MAA Copolymer. The results are given below in Table II.

Table II

| Example | Carboxylic Copolymer | Impact Strength (joules) As Molded | Annealed |
|---|---|---|---|
| 6 | A(1) | 30.28 | 1.41 |
| 7 | B(2) | 37.06 | 2.7 |

(1) Ethylene/methacrylic acid (96:4) copolymer having a melt index of 0.8.

(2) Ethylene/methacrylic acid (90:10) copolymer 71% neutralized with zinc cation.

This table shows more clearly that shaping in a cold mold produces a much tougher article than shaping with annealing.

Examples 8-9

Films were made and tested for xylene permeability as described above. The test was run for 456.5 hours under ambient temperature and pressure conditions. The results are summarized in Table III, below.

**Table III**

**Composition**

| Example | PET | Ethylene Polymer A(1) | Ethylene Polymer B(2) | Film Thickness (mm) | Loss (grams) |
|---|---|---|---|---|---|
| 8 | 60 | 40 | | 0.05 | 0.05 |
| 9 | 60 | 30 | 10 | 0.05 | 0.23 |

(1) Ethylene/methacrylic acid (96:4) copolymer

(2) Ethylene/methacrylic acid (90:10) copolymer, 71% neutralized with zinc cation

## Claims

1. A process for melt-fabricating articles having low permeability to gases and to organic liquids selected from aliphatic and aromatic hydrocarbons, ketones, alcohols, ethers and esters from blends of 45-95 weight percent of polyethylene terephthalate with 5-55 weight percent of a toughening polymer selected from
   (a) copolymers of at least 70 weight % of an alpha-olefin having 2-5 carbon atoms with at most 30 weight % of an alpha, beta-unsaturated carboxylic acid,
   (b) copolymers of ethylene with an alpha, beta-unsaturated carboxylic acid and a third ethylenically unsaturated monomer, their respective weight ratios in the polymer being 40-95%, 0.5-20%, and 10-40%, the sum of the percentage contents of the monomers being 100%;
   (c) ionomers obtained by a complete or partial neutralization of a copolymer of paragraph (a) or (b) with zinc or magnesium ions, and

(d) an E/X/Y copolymer, where the monomers E, X, and Y are as follows:
E is ethylene and comprises 40-90 weight percent of the ethylene copolymer;
X is a carboxylic ester represented by the formula

$$CH_2 = \overset{R_2}{\overset{|}{C}}H-\overset{O}{\overset{\|}{C}}-O-R_1 ,$$

where $R_1$ is an alkyl group with 2-8 carbon atoms; and
$R_2$ is H, $CH_3$, or $C_2H_5$; and X
comprises 10-40 weight percent of the E/X/Y copolymer; and
Y is selected from the group consisting of glycidyl methacrylate and glycidyl acrylate, and y comprises 0.5-20 weight percent of the E/X/Y copolymer,
the sum of the percentage contents of the monomers being 100%; said blends containing 0-10% based on the total polymer weight of a finely ground, non-nucleating filler,
wherein the melt-fabrication is conducted under conditions minimizing polyethylene terephthalate crystallization by keeping the surfaces of melt-fabricating equipment in contact with the polymer blend below 100 °C or by rapidly quenching the melt fabricated article to a temperature of below 100 °C.

2. A process of claim 1, wherein the melt fabrication is conducted in the absence of a nucleating agent.

3. A process of claim 1 or claim 2, wherein the surfaces of the melt-fabricating equipment in contact with the polymer are kept to below 50 °C.

4. A process of claim 1 or claim 2 wherein the temperature below which the article is quenched is 50 °C.

5. A process of any one of the preceding claims wherein the toughening polymer is a copolymer of ethylene with an unsaturated carboxylic acid.

6. A process of claim 5 wherein the unsaturated carboxylic acid is methacrylic acid.

7. A process of claim 6 wherein the amount of methacrylic acid in the copolymer is 3-20 weight %.

8. A process of claim 6 or 7 wherein the amount of copolymer of ethylene with methacrylic acid is 20-40 weight percent of the blend with polyethylene terephthalate.

9. A process of any one of claims 6 to 8 wherein the copolymer of ethylene with methacrylic acid is neutralized with magnesium or zinc ions.

10. A process of any one of claims 1 to 4 wherein the toughening polymer is a copolymer of ethylene with an $\alpha,\beta$-unsaturated carboxylic acid and with an acrylic ester or a vinyl ester.

11. A process of claim 10 wherein the ester is isobutyl acrylate, and the acid is methacrylic or acrylic acid.

12. A process of any one of claims 1 to 4 wherein the toughening polymer is an E/X/Y copolymer, wherein $R_2$ is hydrogen or methyl, and X comprises 15-35, preferably 20-35 weight percent of the E/X/Y copolymer, while Y comprises 2-10, preferably 3-8 weight percent of the E/X/Y copolymer.

13. A process of claim 12 wherein $R_1$ is an alkyl group with 4-6 carbon atoms.

14. A process of claim 13 wherein X is n-butyl acrylate and Y is glycidyl methacrylate, preferably wherein the respective weight proportions of n-butyl acrylate and glycidyl methacrylate are 10 to 40% and 0.5 to 20%.

15. A process of claim 1 wherein a portion of the toughening polymer is replaced with another polymer which is chemically inert to the other two polymers under melt-fabricating conditions, its amount being at most equal to that of the toughening polymer of the type recited in claim 1, the other polymer being

selected from the class consisting of polyolefins, polystyrene, ethylene/vinyl acetate polymers, ethylene/alkyl acrylate copolymers, and mixtures thereof, and the process optionally being as further defined in any one of claims 2 to 14.

## Revendications

1. Un procédé pour façonner au fondu des articles ayant une faible perméabilité à des gaz et des liquides organiques choisis parmi les hydrocarbures aliphatiques et aromatiques, les cétones, les alcools, les éthers et les esters, à partir de mélanges de 45 à 95 pour cent en poids de polytéréphtalate d'éthylène avec 5 à 55 pour cent en poids d'un polymère de renforcement choisi parmi
   (a) les copolymères d'au moins 70 % en poids d'une alpha-oléfine ayant 2 à 5 atomes de carbone avec au plus 30 % en poids d'un acide carboxylique insaturé en alpha,bêta,
   (b) les copolymères d'éthylène avec un acide carboxylique insaturé en alpha,bêta et un troisième monomère éthyléniquement insaturé, leurs proportions en poids respectives dans le polymère étant de 40 à 90 %, 0,5 à 20 % et 10 à 40 %, la somme des teneurs en pourcentage des monomères étant égale à 100 % ;
   (c) les ionomères obtenus par une neutralisation totale ou partielle d'un copolymère du paragraphe (a) ou (b) avec des ions zinc ou magnésium, et
   (d) un copolymère E/X/Y, où les monomères E, X et Y sont comme suit :
   E est l'éthylène et constitue 40 à 90 pour cent en poids du copolymère d'éthylène ;
   X est un ester carboxylique représenté par la formule

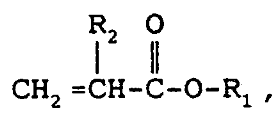

   où $R_1$ est un groupe alkyle ayant 2 à 8 atomes de carbone ; et
   $R_2$ est H, $CH_3$ ou $C_2H_5$ ;
   et X constitue 10 à 40 pour cent en poids du copolymère E/X/Y ; et
   Y est choisi dans le groupe formé par le méthacrylate de glycidyle et l'acrylate de glycidyle, et Y constitue 0,5 à 20 pour cent en poids du copolymère E/X/Y,
   la somme des teneurs en pourcentage des monomères étant égale à 100 % ; lesdits mélanges contenant 0 à 10 %, par rapport au poids de polymère total, d'une charge non nucléante finement broyée,
   dans lequel le façonnage au fondu est exécuté dans des conditions minimisant la cristallisation du polytéréphtalate d'éthylène par maintien des surfaces de l'appareillage de façonnage au fondu qui sont en contact avec le mélange de polymères au-dessous de 100° C ou par brusque refroidissement de l'article façonné au fondu jusqu'à une température inférieure à 100° C.

2. Un procédé de la revendication 1, dans lequel le façonnage au fondu est exécuté en l'absence d'un agent de nucléation.

3. Un procédé selon la revendication 1 ou la revendication 2, dans lequel les surfaces de l'appareillage de façonnage au fondu qui sont en contact avec le polymère sont maintenues au-dessous de 50° C.

4. Un procédé de la revendication 1 ou de la revendication 2, dans lequel la température au-dessous de laquelle l'article est brusquement refroidi est de 50° C.

5. Un procédé de l'une quelconque des revendications précédentes, dans lequel le polymère de renforcement est un copolymère d'éthylène avec un acide carboxylique insaturé.

6. Un procédé de la revendication 5 dans lequel l'acide carboxylique insaturé est l'acide méthacrylique.

7. Un procédé de la revendication 6, dans lequel la quantité d'acide méthacrylique dans le copolymère est de 3 à 20 % en poids.

8. Un procédé de la revendication 6 ou 7, dans lequel la quantité de copolymère d'éthylène et d'acide

méthacrylique est de 20 à 40 pour cent en poids du mélange avec le polytéréphtalate d'éthylène.

9. Un procédé de l'une quelconque des revendications 6 à 8, dans lequel le copolymère d'éthylène et d'acide méthacrylique est neutralisé avec des ions magnésium ou zinc.

10. Un procédé de l'une quelconque des revendications 1 à 4, dans lequel le polymère de renforcement est un copolymère d'éthylène et d'un acide carboxylique insaturé en $\alpha,\beta$ et avec un ester acrylique ou un ester de vinyle.

11. Un procédé de la revendication 10, dans lequel l'ester est l'acrylate d'isobutyle, et l'acide est l'acide méthacrylique ou acrylique.

12. Un procédé de l'une quelconque des revendications 1 à 4, dans lequel le polymère de renforcement est un copolymère E/X/Y, où $R_2$ est l'hydrogène ou un groupe méthyle et X constitue 15 à 35, de préférence 20 à 35 pour cent en poids du copolymère E/X/Y, tandis que Y constitue 2 à 10, de préférence 3 à 8 pour cent en poids du copolymère E/X/Y.

13. Un procédé de la revendication 12, dans lequel $R_1$ est un groupe alkyle ayant 4 à 6 atomes de carbone.

14. Un procédé de la revendication 13, dans lequel X est l'acrylate de n-butyle et Y est le méthacrylate de glycidyle, les proportions en poids respectives d'acrylate de n-butyle et de méthacrylate de glycidyle étant de préférence de 10 à 40 % et de 0,5 à 20 %.

15. Un procédé de la revendication 1, dans lequel une partie du polymère de renforcement est remplacée par un autre polymère qui est chimiquement inerte vis-à-vis des deux autres polymères dans les conditions de façonnage au fondu, sa quantité étant au plus égale à celle du polymère de renforcement du type mentionné dans la revendication 1, l'autre polymère étant choisi dans la classe constituée par les polyoléfines, le polystyrène, les polymères éthylène/acétate de vinyle, les copolymères éthylène/acrylate d'alkyle, et leurs mélanges, et le procédé étant facultativement tel que défini plus spécifiquement dans l'une quelconque des revendications 2 à 14.

## Ansprüche

1. Verfahren zur Schmelz-Herstellung von Gegenständen mit niedriger Permeabilität für Gase und organische Flüssigkeiten, ausgewählt aus aliphatischen und aromatischen Kohlenwasserstoffen, Ketonen, Alkoholen, Ethern und Estern, aus Mischungen von 45 bis 95 Gew.-% Polyethylenterephthalat mit 5 bis 55 Gew.-% eines zähmachenden Polymers, ausgewählt aus
   (a) Copolymeren von wenigstens 70 Gew.-% eines $\alpha$-Olefins mit 2 bis 5 Kohlenstoffatomen mit höchstens 30 Gew.-% einer $\alpha,\beta$-ungesättigten Carbonsäure,
   (b) Copolymeren von Ethylen mit einer $\alpha,\beta$-ungesättigten Carbonsäure und einem dritten ethylenisch ungesättigten Monomer, wobei ihre jeweiligen Gewichtsverhältnisse im Polymer 40 bis 90 %, 0,5 bis 20 % und 10 bis 40 % ausmachen und die Summe der prozentualen Anteile der Monomeren 100 % ist;
   (c) aus einer vollständigen oder teilweisen Neutralisation eines Copolymers aus Absatz (a) oder (b) mit Zink- oder Magnesiumionen erhaltenen Ionomeren und
   (d) einem E/X/Y-Copolymer, worin die Monomeren E, X und Y wie folgt sind:
   E ist Ethylen und umfaßt 40 bis 90 Gew.-% des Ethylen-copolymers;
   X ist ein durch die Formel wiedergegebener Carbonsäure- -ester

$$CH_2 = \overset{\overset{R_2}{|}}{C}H-\overset{\overset{O}{\|}}{C}-O-R_1$$

   worin $R_1$ eine Alkylgruppe mit 2 bis 8 Kohlenstoffatomen ist und $R_2$ H, $CH_3$ oder $C_2H_5$ ist, wobei X 10 bis 40 Gew.-% des E/X/Y-Copolymers ausmacht; und

Y ist aus der aus Glycidylmethacrylat und Glycidylacrylat bestehenden Gruppe ausgewählt, wobei Y 0,5 bis 20 Gew.-% des E/X/Y-Copolymers ausmacht,
und wobei die Summe der prozentualen Anteile der Monomeren 100 % ausmacht; welche Mischungen 0 bis 10 %, bezogen auf das gesamte Polymergewicht, eines fein gemahlenen, nicht-nukleierenden Füllstoffs enthalten,
worin die Schmelz-Herstellung unter Bedingungen durchgeführt wird, die die Polyethylenterephthalatkristallisation minimieren, indem die Oberfläche der Ausrüstung für die Schmelz-Herstellung in Berührung mit der Polymermischung unter 100 °C gehalten wird oder indem der schmelz-hergestellte Gegenstand schnell auf eine Temperatur unter 100 °C gequenscht wird.

2. Verfahren nach Anspruch 1, worin die Schmelz-Herstellung in Abwesenheit eines Nukleierungsmittels durchgeführt wird.

3. Verfahren nach Anspruch 1 oder Anspruch 2, worin die Oberflächen der Ausrüstung für die Schmelz-Herstellung in Berührung mit dem Polymer unter 50 – G gehalten werden.

4. Verfahren nach Anspruch 1 oder Anspruch 2, worin die Temperatur, unter die der Gegenstand gequenscht wird, 50 °C ist.

5. Verfahren nach einem der vorstehenden Ansprüche, worin das zäh-machende Polymer ein Copolymer von Ethylen mit einer ungesättigten Carbonsäure ist.

6. Verfahren nach Anspruch 5, worin die ungesättigte Carbonsäure Methacrylsäure ist.

7. Verfahren nach Anspruch 6, worin die Menge an Methacrylsäure im Copolymer 3 bis 20 Gew.-% ist.

8. Verfahren nach Anspruch 6 oder 7, worin die Menge an Copolymer von Ethylen mit Methacrylsäure 20 bis 40 Gew.-% der Mischung mit Polyethylenterephthalat ist.

9. Verfahren nach einem der Ansprüche 6 bis 8, worin das Copolymer von Ethylen mit Methacrylsäure mit Magnesium- oder Zinkionen neutralisiert wird.

10. Verfahren nach einem der Ansprüche 1 bis 4, worin das zäh-machende Polymer ein Copolymer von Ethylen mit einer $\alpha,\beta$-ungesättigten Carbonsäure und mit einem Acrylester oder einem Vinylester ist.

11. Verfahren nach Anspruch 10, worin der Ester Isobutylacrylat ist und die Säure Methacrylsäure oder Acrylsäure.

12. Verfahren nach einem der Ansprüche 1 bis 4, worin das zäh-machende Polymer ein E/X/Y-Copolymer ist, worin $R_2$ Wasserstoff oder Methyl ist und X 15 bis 35, vorzugsweise 20 bis 35 Gew.-% des E/X/Y-Copolymers ausmacht, während Y 2 bis 10, vorzugsweise 3 bis 8 Gew.-% des E/X/Y-Copolymers ausmacht.

13. Verfahren nach Anspruch 12, worin $R_1$ eine Alkylgruppe mit 4 bis 6 Kohlenstoffatomen ist.

14. Verfahren nach Anspruch 13, worin X n-Butylacrylat ist und Y Glycidylmethacrylat ist und worin vorzugsweise die jeweiligen Gewichtsanteile von n-Butylacrylat und Glycidylmethacrylat 10 bis 40 % und 0,5 bis 20 % sind.

15. Verfahren nach Anspruch 1, worin ein Anteil des zäh-machenden Polymers durch ein anderes Polymer ersetzt wird, das gegen die anderen zwei Polymere unter Bedingungen der Schmelz-Herstellung chemisch inert ist, wobei seine Menge höchstens gleich der des zäh-machenden Polymers vom in Anspruch 1 genannten Typ ist und wobei das andere Polymer aus der aus Polyolefinen, Polystyrol, Ethylen/Vinylacetatpolymeren, Ethylen/Alkylacrylatcopolymeren und Mischungen davon bestehenden Gruppe ausgewählt ist und das Verfahren gegebenenfalls ist wie weiter in einem der Ansprüche 2 bis 14 definiert.